# EUROPEAN PATENT APPLICATION

(11) **EP 0 745 562 A2**
(43) Date of publication of application: **04.12.1996**
(21) Application number: 96103069.9
(22) Date of filing: 29.02.1996
(51) Int. Cl.: C02F 3/30, C02F 3/12

(54) **Purification system for groundwater or wastewater; biochemical reactor and liquid-transport stirring apparatus**

(30) Priority: 31.05.1995 JP 133150/95
(71) Applicant: Matsumura, Masatoshi, Tsukuba-shi, Ibaragi 305 (JP); BIOMATERIAL CO., LTD., Fukui 910 (JP)
(72) Inventor: Matsumura, Masatoshi, Ibaragi 305 (JP); Fujii, Naoyuki, Fukui 910 (JP); Imaida, Yoshimi, Ichinomiya-shi, Aichi 491 (JP)
(74) Representative: VOSSIUS & PARTNER

(57) **Abstract**

The biochemical reactor of liquid current type comprises a vessel (4) to hold an immobilizing carrier (95) and a raw liquid (96) and a transport means for transporting and circulating said immobilizing carrier (95) and said raw liquid (96) over a certain distance from one place to another in said vessel (4), said transport means including a rotary drive (9), a tubular centrifugal force generator (2) which is turned by said rotary drive (9) and has a suction passage (11) extending outward from the axis of rotation and terminating with an outlet (10), and a tubular fluid guide (3) which has an inlet (3h) at one end thereof and an internal passage extending from said inlet (3h) and communicating with said suction passage (11) of said centrifugal force generator (2), said inlet (3h) of said fluid guide (3) and said outlet (10) of said centrifugal force generator (2) being positioned apart in said vessel (4). The fluid transport-stirring apparatus is capable of transporting and stirring any desired fluid by the aid of said transport means.

## Description

The present invention relates to a biochemical reactor of liquid current type and an application thereof. Said biochemical reactor is designed to utilize biodegradation by microorganisms (such as protozoa, mold, actinomycetes, yeast, and bacteria) to obtain desired products, to selectively remove specific elements or compounds from groundwater and wastewater, or to perform their conversion.

The present invention relates also to an apparatus for transporting and stirring fluids which can be used for said biochemical reactor. Said apparatus is suitable to transport and stir a large amount of fluid (including liquid, gas, and solid-containing liquid) with a small driving force.

There is known a conventional biochemical reactor of liquid current type which is designed to remove specific elements from raw liquids by using biodegradation by microorganisms. It consists of a vessel to hold a raw liquid and a carrier on which microorganisms are immobilized. Biodegradation in the vessel proceeds as the raw liquid is stirred by an impeller so that the liquid comes into uniform contact with the carrier.

An apparatus like this is called bioreactor. It is a reactor capable of performing highly specific reactions by utilizing the biological function. Typical examples of its application include the production of alcohol and antibiotics by cultured microorganisms and the removal of nitrogen and specific elements from groundwater and wastewater. Recently, its application to the denitrification of groundwater attracts attention because contamination of groundwater with chemical fertilizers is a serious social issue.

What is most required of a bioreactor is freedom from breakage of carrier resulting from stirring and uniform dispersion of carrier and uniform flow of liquid in the vessel.

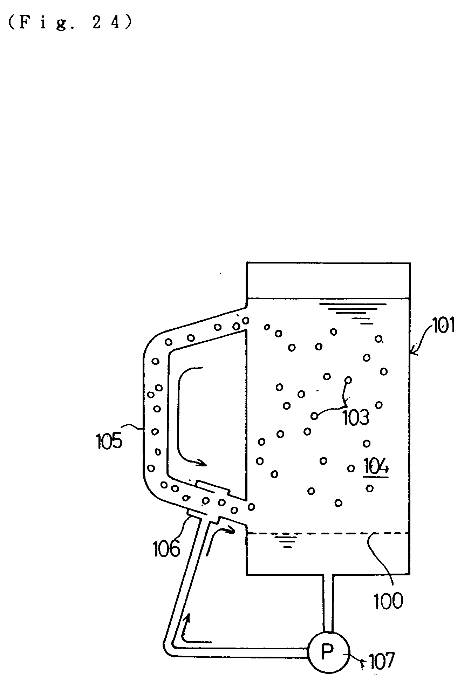

The disadvantage of the above-mentioned bioreactor that employs an impeller is that it is difficult to control the shear stress exerted on the carrier and to keep uniform the raw liquid in the vessel because the carrier floats when the microorganisms immobilized thereon give off a gas, thereby reducing the apparent specific gravity of the carrier. In order to address this problem, there has been proposed a biochemical reactor of liquid current type in Japanese Patent Laid-open No. 138960/1990. This apparatus is constructed as shown in Fig. 24. Its major component is a vessel 101 that has two spaces therein separated horizontally by a filter 100. The vessel 101 holds a raw liquid 104 and a carrier 103 that carries immobilized microorganisms thereon. On the side wall of the vessel 101 is a circulating pipe 105 which discharges the raw liquid (together with the carrier) from the outlet near the surface of the raw liquid and returns it to the vessel through the inlet near the top of the filter 100. The circulating pipe 105 is provided with a liquid current jet mechanism 106. The jet mechanism 106 is fed with the treated liquid (free of the carrier) discharged from the bottom of the vessel and pressurized by a circulating pump 107. The resulting jet generates an upward swirl in the vessel so as to stir the raw liquid and carrier.

This bioreactor offers the advantage that the carrier is not broken because stirring is effected by liquid current, not by an impeller. Another advantage is that the holdup of the carrier near the surface of the raw liquid is reduced because the floating carrier is transported to the bottom of the vessel.

Nevertheless, the bioreactor that employs the jet mechanism suffers the disadvantage that the filter 100 is indispensable because the jet mechanism has to be fed with the treated liquid free of the carrier. The presence of the filter 100 makes the apparatus complex in construction and generates a problem with clogging and maintenance. In addition, the jet mechanism needs a circulating pump of large capacity if a large amount of raw liquid is to be treated. This makes it difficult to construct a large-scale apparatus at a reasonable cost. Moreover, the jet mechanism poses a problem with its complex structure. Although the jet flow is less liable to damage the carrier than the impeller, the carrier is not completely exempt from damage by the jet flow at a high velocity under a high pressure.

The present invention was completed to eliminate the above-mentioned disadvantages involved in the conventional technology. An object of the present invention is to provide a means to circulate and transport a large amount of raw liquid and carrier slowly by a low-power drive unit without causing damage to the carrier. Another object of the present invention is to provide a biochemical reactor of liquid current type provided with said transport means. Further, another object of the present invention is to provide a purifying system for groundwater and wastewater that employs said biochemical reactor. Furthermore, another object of the present invention is to provide a general-purpose apparatus for transporting and stirring liquids by using said transport means. This apparatus is capable of transporting and stirring a large amount of liquid slowly by a low-power driving unit.

To attain the above-mentioned objects, the present inventors carried out a series of researches which led to an idea of an entirely new transport means in place of the liquid current jet mechanism. Thus they completed a new biochemical reactor of liquid current type which is provided with this transport means.

According to one aspect of the present invention, there is provided a biochemical reactor of liquid current type which comprises: a vessel to hold an immobilizing carrier; and a raw liquid and a transport means to transport said immobilizing carrier and said raw liquid over a certain distance from one place to another in said vessel, wherein said transport means includes a rotary drive; a tubular centrifugal force generator which is turned by said rotary drive and has a suction passage extending outward from the axis of rotation and terminating with an outlet; and a tubular fluid guide which has an inlet at one end thereof and an internal passage extending from said inlet and communicating with said suction passage of said centrifugal force generator, wherein said inlet of said fluid guide and said outlet of said centrifugal force generator is positioned apart in said vessel.

The inlet of the fluid guide and the outlet of the centrifugal force generator are properly positioned according to the direction in which the fluid is transported. They may be positioned apart vertically in the vessel in the case where there is a difference in specific gravity between the carrier and the raw liquid and the carrier is likely to float or precipitate in the vessel.

In the case where the carrier tends to float because of its lower specific gravity than that of the raw liquid, it is desirable that the upper part of the vessel be tapered off and the inlet of the fluid guide be positioned in this confined space where the carrier accumulates.

The inlet of the fluid guide may be stationary or vertically movable by an adjustable means.

The fluid guide, which leads the fluid to the centrifugal force generator, may be positioned such that its axis aligns with the shaft of the rotary drive.

The centrifugal force generator and the fluid guide may be integrally formed from a single tube, so that they are turned together. Alternatively, they may be formed separately and rotatably joined together, so that the centrifugal force generator is turned alone.

The centrifugal force generator may be enclosed by a hollow cylindrical casing so that it is relieved from fluid resistance it meets during its rotation. The hollow cylindrical casing has approximately the same radius as the maximum radius of rotation of the centrifugal force generator. It also has an opening in its circumferential wall, which communicates with the outlet of the centrifugal force generator.

The raw liquid may be fed to and discharged from the vessel intermittently or continuously. In the latter case, the vessel may be provided with a means to feed the raw liquid continuously and to discharge the treated liquid continuously.

The biochemical reactor of liquid current type in the present invention may be used alone or in series. (In the latter case, two or more units of the reactor may be arranged side by side or on top of the other.) In the case of series operation, the treated liquid discharged from the preceding unit is fed into the following unit.

The biochemical reactor in the present invention can be used regardless of whether the apparent specific gravity of the immobilizing carrier is greater or smaller than that of the raw liquid. It is capable of smoothly introducing the immobilizing carrier into the lower part of the vessel, thereby uniformly dispersing the carrier in the vessel, even though the carrier has an apparent specific gravity smaller than 1.2 and tends to float and accumulate in the conventional apparatus. (The carrier decreases in apparent specific gravity if the microorganisms it supports give off a gas that remains in it or sticks to its surface.)

The biochemical reactor of the present invention may be used for denitrification or methane fermentation if the carrier supports denitrifying bacteria or methane-generating bacteria, respectively. It may also be used for reducing the level of ammonium nitrogen or BOD (biochemical oxygen demand) if the immobilizing carrier supports nitrifying bacteria or microorganisms living in activated sludge.

As mentioned above, the biochemical reactor of the present invention is most suitable for applications where the immobilizing carrier is used; however, it may also be suitable for applications where the immobilizing carrier is not used.

The biochemical reactor of the present invention may be incorporated into existing water purification facilities made up of sedimentation basins, filter tanks, and chemical treatment tanks, and the like.

The transport means used in the above-mentioned biochemical reactor may be applied to other purposes or to the general-purpose fluid transport-stirring apparatus. This apparatus is made up of a rotary drive means and a centrifugal force generator, the latter including a suction passage along the axis of rotation and a tube extending outward from the axis of rotation and terminating with an outlet. The centrifugal force generator is immersed in the vessel holding a fluid.

The biochemical reactor of liquid current type according to the present invention is designed to selectively remove and convert specific elements and compounds contained in the raw liquid by the aid of microorganism, cells, or enzymes immobilized on a carrier. The microorganisms proliferate as they capture specific elements or compounds in the raw liquid, and the raw liquid is freed of specific elements (such as nitrogen) and compounds.

The immobilizing carrier is circulated together with the raw liquid in the reactor. This circulation takes place in the following manner. In the following explanation, the raw liquid containing the carrier is referred to as fluid.

The carrier supporting microorganisms floats, precipitates, or suspends in the raw liquid, depending respectively on whether its specific gravity is smaller or greater than or equal to that of the raw liquid. The carrier is sucked into the fluid guide through its suction inlet which is positioned where the carrier accumulates, and then it is introduced, through the fluid guide, to the tubular centrifugal force generator.

During rotation, the centrifugal force generator exerts centrifugal force on the fluid passing through it. As a result, the fluid is discharged from the outlet of the centrifugal force generator. At the same time, as much fluid as discharged is taken into the fluid guide through its suction inlet. In this way the fluid is transported from one place to another in the vessel. The transport of fluid brings about stirring because the fluid is discharged as the outlet turns about the axis of rotation.

The fluid passage in the centrifugal force generator has no mechanical parts at all (except a shaft to transmit the rotary motion). This permits a large amount of fluid to be transported without causing any damage to it.

The centrifugal force generator turns at a relatively low speed. In addition, it has no sharp edges like an impeller. Therefore, it does not harm the carrier suspending around it. It needs only a small driving power and hence a small drive unit.

In the case where there is a difference in specific gravity between the carrier supporting microorganisms and the raw liquid, the carrier will float or precipitate. Since the suction inlet of the fluid guide is positioned where there exists the carrier, the floating carrier is transported downward in the vessel and the precipitating carrier is transported upward in the vessel.

According to another aspect of the invention, the suspending carrier is uniformly collected from the area surrounding the suction inlet and then introduced into the fluid guide.

According to another aspect of the invention, if the fluid guide is constructed such that the suction inlet is movable up and down according to the level of the raw liquid, it is possible to control the amount of the carrier to be sucked into the inlet.

According to another aspect of the invention, if the fluid guide is constructed such that the axis of its tube is aligned with the shaft of the rotary drive, the fluid guide does not exert centrifugal force on the fluid passing through it and hence does not prevent the fluid from being discharged by centrifugal force generated by the centrifugal force generator.

According to another aspect of the invention, if the centrifugal force generator and the fluid guide are integrally constructed of a single tube, they rotate together.

According to another aspect of the invention, if the centrifugal force generator and the fluid guide are rotatably joined to each other, the former alone rotates.

According to another aspect of the invention, if the centrifugal force generator is enclosed by a hollow cylindrical casing, which has approximately the same radius as the maximum radius of its rotation and also has an opening in its circumferential wall, which communicates with its outlet, and is capable of rotating together with it, it meets very little resistance during its rotation because the hollow cylindrical casing has a symmetry of rotation, and hence the rotary drive unit needs only a small amount of power.

According to another aspect of the invention, if two or more units of the biochemical reactor of liquid current type are arranged side by side or on top of the other so that the raw liquid is treated in multiple stages, it is possible to increase the efficiency of treatment because the raw liquid is circulated less frequently in each unit.

The biochemical reactor of liquid current type according to the present invention may be applied to the handling of a raw liquid containing no carrier. In this case it permits a large amount of liquid to be transported slowly with a small amount of electric power.

If the above-mentioned biochemical reactor of liquid current type is combined with existing water purification facilities made up of sedimentation basins, filter tanks, and chemical treatment tanks, and the like, then it realizes the reduction of specific elements (such as nitrogen) and compounds and BOD which could not be achieved by the conventional purification system.

The effect of applying the above-mentioned transport means to the liquid transport-stirring apparatus is that the centrifugal force generator exerts centrifugal force on the fluid passing through it so that the fluid is discharged from its outlet and sucked into it through its suction passage. Since the fluid is discharged as the outlet turns, the transport and stirring of the fluid can be achieved simultaneously.

Having no mechanical parts at all (except a shaft to transmit the rotary motion), the fluid passage in the centrifugal force generator permits a large amount of fluid to be transported without causing any damage to solids which might be contained in the fluid.

Since the centrifugal force generator turns at a relatively low speed and has no sharp edges like an impeller, it does not harm the solids suspending around it. In addition, it needs only a small driving power and hence a small drive unit.
Fig. 1 is a sectional view of one example which illustrates the basic structure of the biochemical reactor of liquid current type according to the present invention;
Fig. 2 is a sectional view taken along the line X-X in Fig. 1;
Fig. 3 is a perspective view showing the structure of the centrifugal force generator;
Fig. 4 is a diagram showing how the centrifugal force generator turns;
Figs. 5(a) and 5(b) are perspective views showing another type of the centrifugal force generator;
Fig. 6 is a perspective view showing another type of the centrifugal force generator;
Fig. 7 is a perspective view showing another type of the centrifugal force generator;
Fig. 8 is a sectional view of one example of the biochemical reactor of liquid current type which employs the centrifugal force generator shown in Fig. 7;
Fig. 9 is a sectional view showing a modified embodiment in which the centrifugal force generator is provided with a rotary drive;
Fig. 10 is a sectional view showing a modified embodiment in which the centrifugal force generator is capable of rotating with respect to the fluid guide;
Fig. 11 is a sectional view of an embodiment in which the transporting pipe is held at its upper and lower parts so that it will not vibrate laterally;
Fig. 12 is a sectional view of an embodiment in which the transporting pipe is held at its upper and lower parts so that it will not vibrate laterally;
Fig. 13 is a sectional view showing a modified embodiment in which the fluid guide is bent;
Fig. 14 is a sectional view showing an embodiment in which the fluid guide partly protrudes from the vessel;
Fig. 15 is a sectional view showing an embodiment in which the fluid is transported upward in the vessel;
Fig. 16 is a sectional view showing an embodiment of the biochemical reactor of liquid current type according to the present invention;
Fig. 17 is a sectional view showing an embodiment in which the carrier inlet is movable vertically;
Fig. 18 is a sectional view showing an embodiment in which the annular inclined wall is movable vertically;
Fig. 19 is a sectional view showing an embodiment in which the annular inclined wall is capable of adjustment of the slope angle;
Fig. 20 is a sectional view showing an embodiment in which the vessel is provided with an outer jacket for warm water;
Fig. 21 is a sectional view showing an embodiment in which two units of the biochemical reactor of liquid current type are vertically arranged in tandem;
Fig. 22 is a sectional view showing an embodiment of the fluid transport-stirring unit according to the present invention;
Fig. 23 is a sectional view showing an embodiment designed to transport a fluid from one vessel to another;
Fig. 24 is a sectional view showing a conventional biochemical reactor of liquid current type;
Fig. 25 is a graph showing the results of experiment on denitrification by the biochemical reactor of liquid current type according to the present invention; and
Fig. 26 is a graph showing the results of experiment on denitrification by the biochemical reactor of liquid current type according to the present invention.

The present invention will be described in more detail with reference to the examples illustrated in the accompanying drawings.

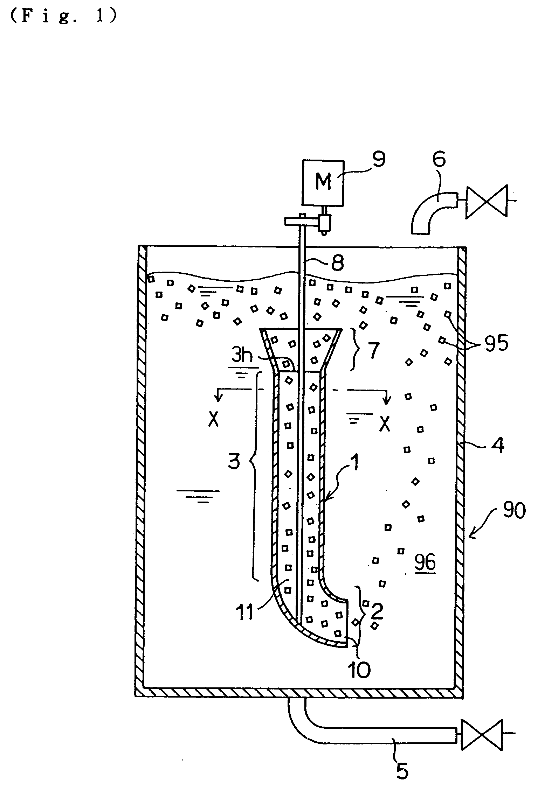

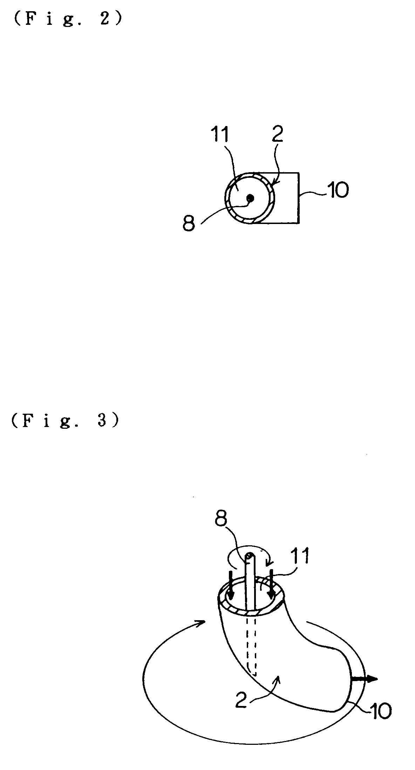

Fig. 1 is a vertical sectional view of one embodiment which illustrates the basic structure of the biochemical reactor of liquid current type according to the present invention. Fig. 2 is a sectional view taken along the line X-X in Fig. 1.

The biochemical reactor in this embodiment is made up of a vessel 4 and a transport tube 1 placed therein. The vessel 4 holds a raw liquid 96 containing an immobilizing carrier 95 which supports microorganisms thereon. The transport tube 1 is rotated by a rotary drive 9 (such as an electric motor).

The vessel is provided at its bottom with a discharge tube 5 through which the treated liquid is discharged. The vessel is also provided at its top with a feed tube 6 through which it is supplied with the raw liquid. The discharge tube 5 and the feed tube 6 may be at different positions. For example, the former may be attached to the side wall of the vessel. In this case, a drain may be attached to the bottom of the vessel so that precipitates are discharged through it.

The carrier 95 may be the one which is disclosed in Japanese Patent Laid-open No. 290443/1991 or the one which is proposed in Japanese Patent Application No. 351234/1993 by the present inventors. The latter is an open-cell foam of cellulose compound resistant to biodegradation. The carrier should have a particle diameter of 0.5 to 50 mm and a pore diameter smaller than 2000 µm. The carrier may be cubic, rectangular parallelepipedic, columnar, or cylindrical in shape. The carrier is not limited to an open-cell foam of cellulose. It may be a porous one of other materials or a gel-like one of calcium alginate or -carrageenan.

What is supported on the carrier may be microorganisms, cells, or enzymes. Microorganisms may be either anaerobic bacteria or aerobic bacteria. The former includes denitrifying bacteria and the latter includes nitrifying bacteria or microorganisms and protozoa living in activated sludge.

Examples of the denitrifying bacteria include the genera of Pseudomonas, Micrococcus, Spirillum, Achromobacter, Alcaligenes, and Hyphomicrobium.

Examples of the nitrifying bacteria include nitrate bacteria belonging to the genera of Nitrobacter and Nitrococcus and nitrite bacteria belonging to the genera of Nitrosomonas and Nitrosococcus.

Examples of the microorganisms living in activated sludge include the genera of Pseudomonas, Klebsiella, Micrococcus, and Microbacterium.

Examples of the protozoa living in activated sludge include the genera of Zoogloea, Vorticella, and Epistilis.

Examples of other microorganisms include those which generate methane gas.

Depending on which bacterium to select, the biochemical reactor of the present invention may be used to cultivate microorganisms for methane fermentation or to proliferate microorganism for purification of groundwater or wastewater. It may also be used to reduce the level of ammonia nitrogen or BOD, if one selects nitrifying bacteria or microorganisms and protozoa living in activated sludge.

Therefore, the raw liquid 96 may be a liquid medium for proliferation of microorganisms; it may also be groundwater or wastewater. The biochemical reactor will vary in scale depending on its application, ranging from laboratory use to factory use, especially large-scale municipal clarification plants. It is suitable for large-scale facilities.

The vessel 4 is a bottomed cylindrical container. The vessel 4 shown in the figure has an open top, but it may be closed with a lid (not shown). In general, an open vessel is used for aerobic bacteria and a closed vessel is used for anaerobic bacteria. The cylindrical vessel may be replaced by a box-like container.

The transport tube 1 is made up of a funnel-shaped carrier collector 7, a straight fluid guide 3 (which has a suction inlet 3h at its top), and a centrifugal force generator 2 which is curved sideward. The transport tube 1 has a rotating shaft 8 along its axis. The carrier collector 7 is not essential, but it is desirable for the carrier to be collected efficiently. The shaft 8 has its lower end fixed to the inner wall of the curved tube of the centrifugal force generator 2. Also, the shaft 8 has its upper end connected to a rotary drive 9 (such as an electric motor) through reduction gears or over-drive gears. Therefore, the rotary force of the rotary drive 9 is transmitted to the transport tube 1 through the shaft 8.

The centrifugal force generator 2 is a tubular member extending outward from the axis of rotation of the rotary drive 9, as shown in Fig. 3. The tubular member terminates with an outlet 10 and extends upward, forming a suction passage 11 around the axis of rotation of the centrifugal force generator 2. The suction passage 11 should be constructed such that when the centrifugal force generator 2 turns, the fluid is moved from the suction passage 11 to the outlet 10 by centrifugal force. Therefore, it is not always necessary that the suction passage 11 be placed in alignment with the axis of rotation. However, it is desirable that the suction passage 11 be placed in alignment with the axis of rotation, unless there is a special reason, because any eccentricity reduces the distance between the suction passage 11 and the outlet 10, thereby reducing the centrifugal force to be generated.

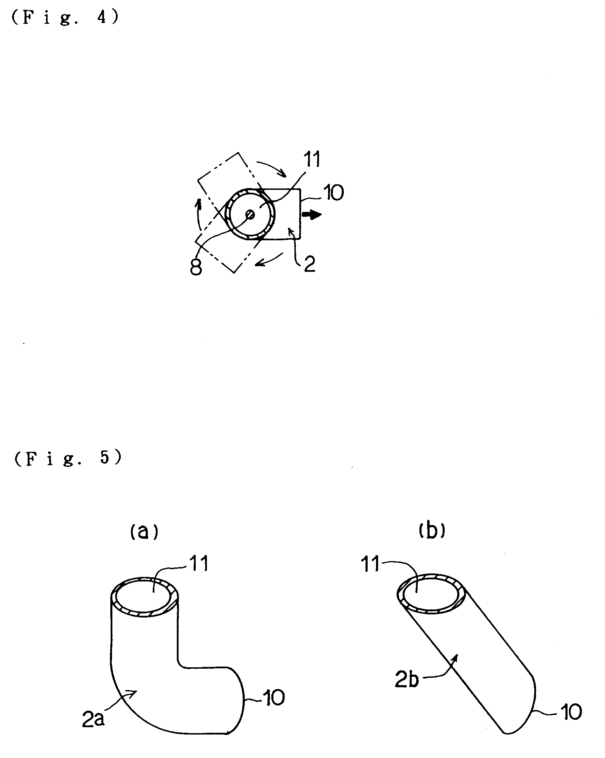

As the transport tube 1 turns about the shaft 8, centrifugal force is exerted on the fluid in the centrifugal force generator 2, thereby causing the fluid to be discharged through the outlet 10 and the fresh fluid to enter through the suction passage 11. Since the outlet 10 turns through 360° as shown in Fig. 4, the transport of the fluid (or the discharge of the fluid from the outlet 10) also produces the effect of stirring the fluid in the vessel. Such stirring brings the fluid (raw liquid) into intimate contact with the carrier, thereby promoting the biodegradation and homogenizing the raw liquid in the vessel.

The fluid passes through the transport tube and leaves the outlet 10. Having no objects (except the shaft) which prevent the smooth flow of the fluid, the transport tube permits a large amount of fluid to flow slowly without causing damage to the carrier 95. Therefore, the carrier 95 can be used continuously for a long period of time. The rotary drive 9 needs only a small amount of power to rotate the transport tube 1 and hence it consumes only a small amount of electric power. In addition, it is simple in structure, almost immune to trouble, and cheap in cost.

The biochemical reactor of liquid current type according to the present invention produces a marked effect when it is used for the treatment of raw liquid by the aid of an immobilizing carrier. It may also be used for treating a raw liquid which contains microorganisms being suspended directly therein, without resorting to the immobilizing carrier. In this case it does not show the effect of protecting the carrier from damage, but it shows the effect of transporting slowly the raw liquid in large quantities by using a low-power rotary drive, as mentioned above.

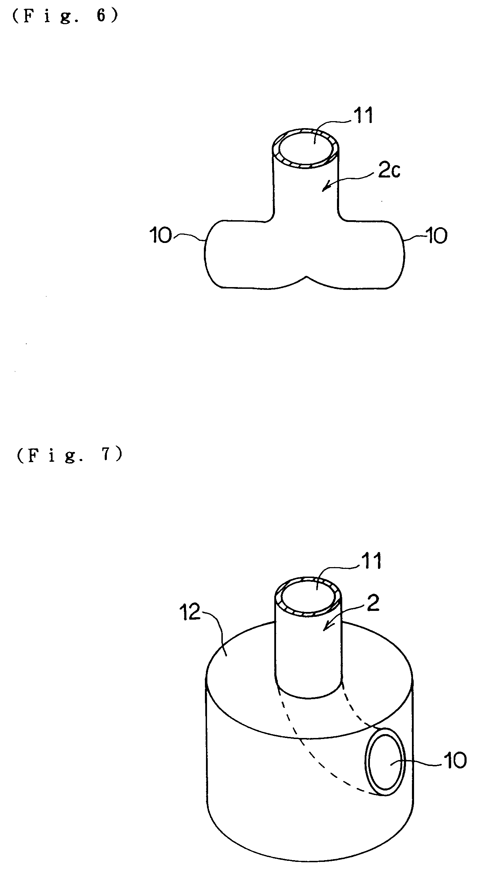

In what follows, the modifications of the embodiments will be explained. The centrifugal force generator 2 may be modified such that its end is sharply bent as shown in Fig. 5(a) or inclined straight as shown in Fig. 5(b) or pronged as shown in Fig. 6. In the last case, it has two outlets 10, 10. It may also have three or more outlets 10 (not shown).

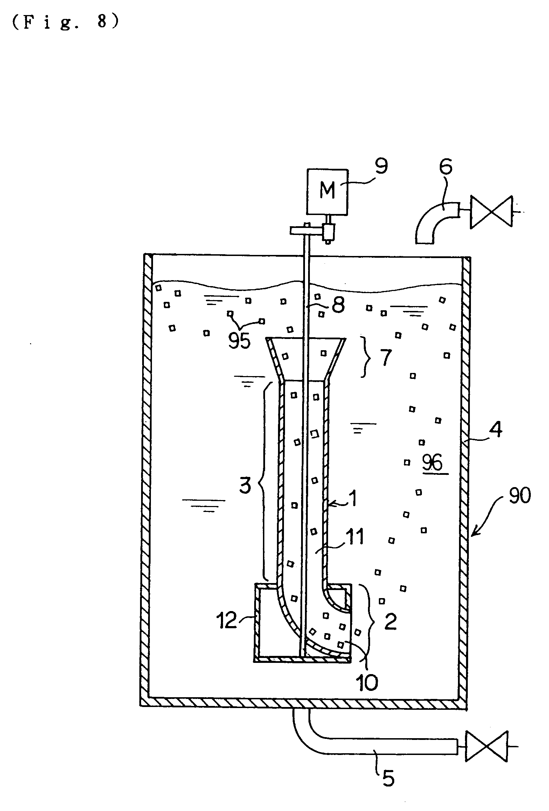

The centrifugal force generator 2 may be modified as shown in Figs. 7 and 8 so as to reduce the liquid resistance it meets during rotation. The modification is such that the centrifugal force generator 2 is enclosed by a hollow cylindrical casing 12 which has approximately the same radius as the maximum radius of rotation of the centrifugal force generator 2. The casing 12 also has in its circumferential wall an opening communicating with the outlet 10 of the centrifugal force generator 2. The hollow cylindrical casing 12 rotates together with the centrifugal force generator 2. However, it meets very little resistance during its rotation because it has a symmetry of rotation, and hence the rotary drive 9 needs only a small amount of power.

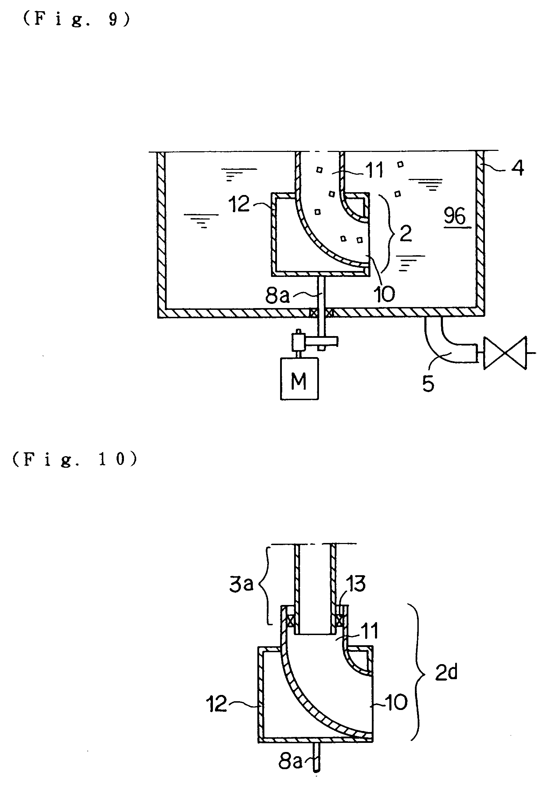

Another modification is shown in Fig. 9. In this case the rotary drive 9 is arranged under the centrifugal force generator 2. Rotation is accomplished by a shaft 8a which penetrates the bottom of the vessel 4 and is fixed to the bottom of the hollow cylindrical casing 12. The advantage of this modification is that the shaft does not pass through the inside of the transport tube and hence the transport tube 1 permits the carrier to flow more smoothly.

Another modification is shown in Fig. 10. It differs from the foregoing embodiments in that the centrifugal force generator 2d alone rotates, with the fluid guide 3a remaining stationary. While the foregoing embodiments are designed such that the centrifugal force generator 2 and the fluid guide 3 rotate together, this modified embodiment is designed such that the centrifugal force generator 2d and the fluid guide 3a are joined to each other through a bearing 13 so that the former rotates independently of the latter. The advantage of this modification is that the rotary drive 9 needs only a small amount of power.

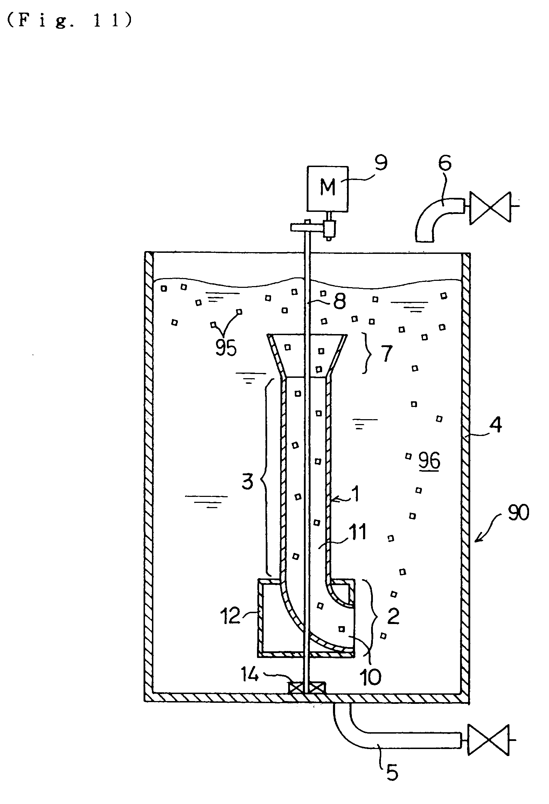

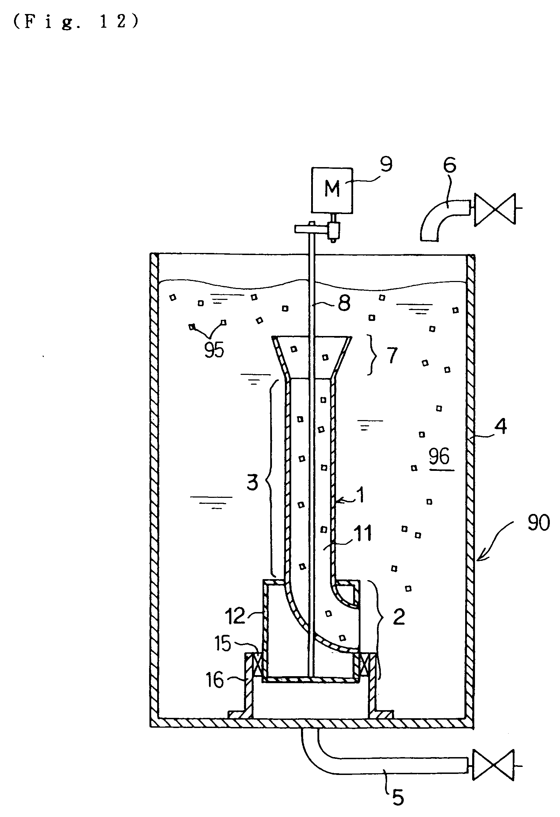

Another modification is shown in Figs. 11 and 12. It is intended to prevent the transport tube 1 from laterally vibrating at its lower end. In the modification of Fig. 11, the shaft 8 is extended to the bottom of the vessel and its end is rotatably held by a bearing 14 at the bottom of the vessel. In the modification of Fig. 12, the hollow cylindrical casing 12 is externally supported by a supporting cylinder 16, with a bearing 15 between them. With the upper and lower parts firmly held in position, the transport tube 1 is protected from lateral vibration during its rotation.

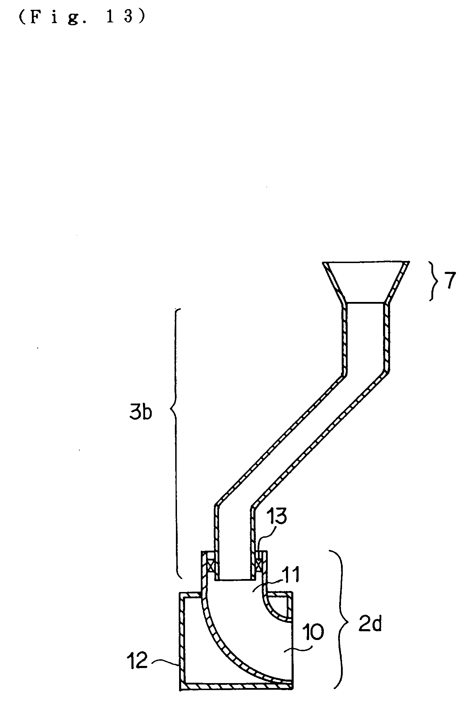

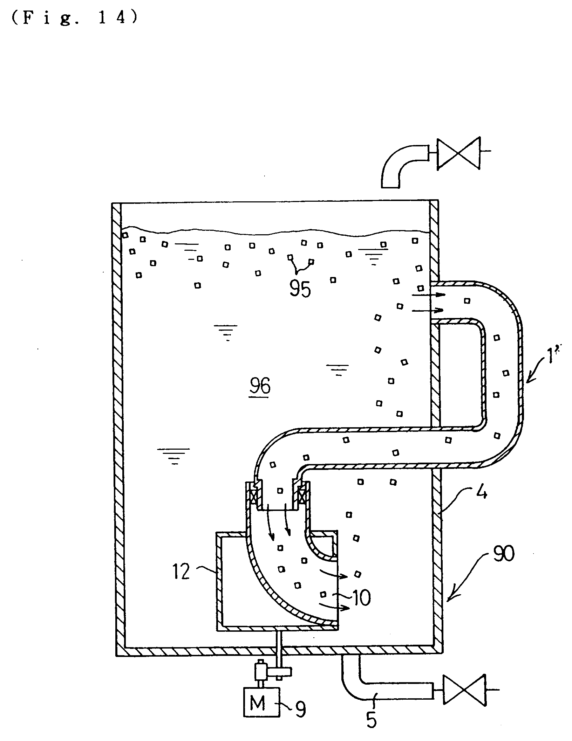

The embodiment shown in Fig. 12 may be modified as shown in Fig. 13. In this modified embodiment, the fluid guide 3b can be bent because it is stationary and the centrifugal force generator 2d alone is rotated. The modification is useful when there is an object in the vessel which is a hindrance to the straight fluid guide. A further another modification is shown in Fig. 14. In this case a part of the transport tube 1' runs outside the vessel.

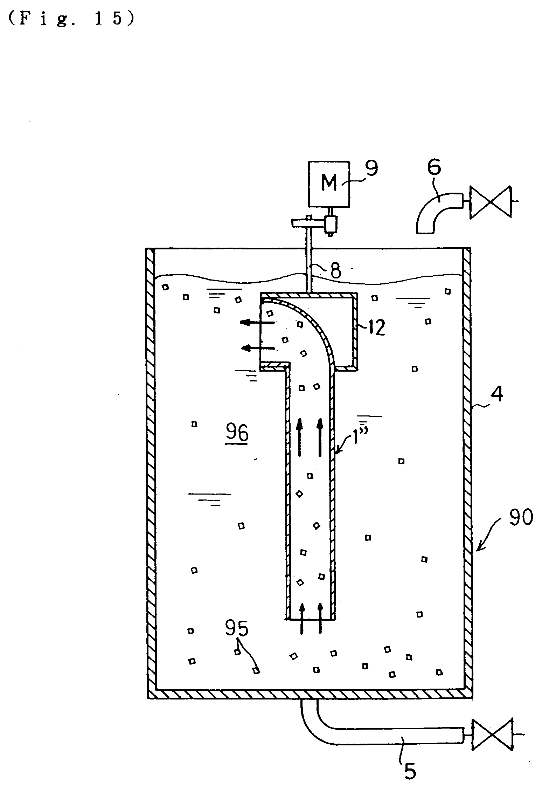

All of the above-mentioned embodiments are designed such that the fluid is transported downward from the upper part of the vessel to the lower part of the vessel. According to the present invention, it is possible to design the system such that the fluid is transported in the opposite direction. An example of such a design is shown in Fig. 15. In this example the centrifugal force generator is installed at the upper part of the transport tube 1''. This arrangement permits the fluid to be sucked up from the bottom of the vessel. It is suitable for handling a carrier which is liable to precipitate because of its higher specific gravity than the raw liquid.

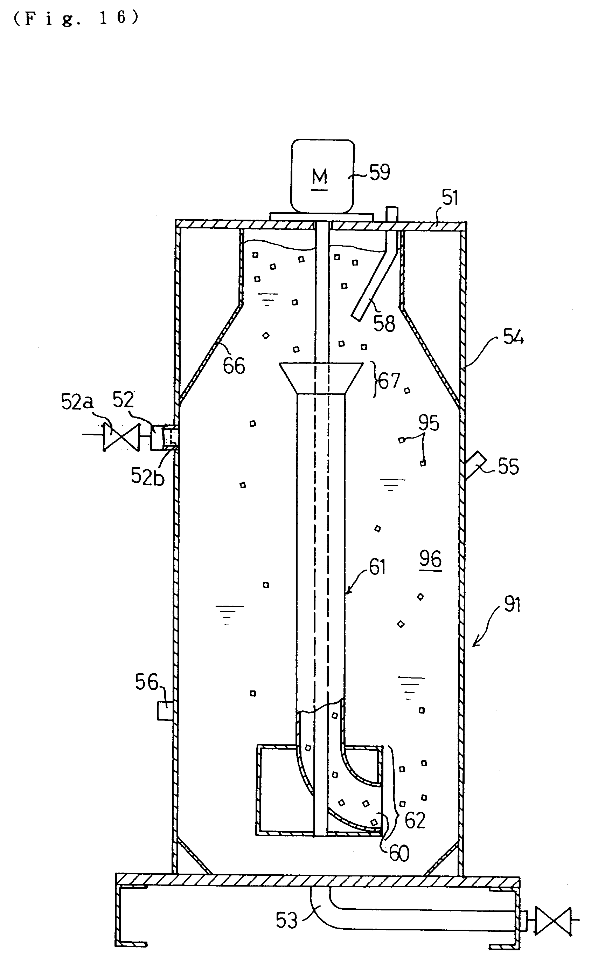

The following is the description of some examples in which the present invention is embodied. One of them is shown in Fig. 16. It is designed to be used for treatment of a liquid containing an immobilizing carrier whose specific gravity is smaller than that of the raw liquid. The vessel 54 is an airtight cylindrical container having a bottom and a lid. For cultivation of anaerobic bacteria such as denitrifying bacteria, it is important to keep air out. The upper lid 51 should be capable of opening and closing so that the immobilizing carrier is replenished and the vessel is cleaned for maintenance. The lid should be of such a structure as to maintain air-tightness. However, for cultivation of aerobic bacteria, the vessel dispenses with the lid. At the onset of operation, the vessel may be supplied with nitrogen for compulsory air purge, although the vessel may be supplied with oxygen for cultivation of aerobic bacteria. The introduction of nitrogen or oxygen may be facilitated by using a conventional diffuser tube or sparger.

The equipment just mentioned above is suitable in the case where the carrier 95 is a porous one which floats because it supports gas-generating bacteria and absorbs gas to reduce its apparent specific gravity below 1.2. The following is about the equipment applied to denitrification of groundwater.

The vessel 54 is provided with a lid 51, which is provided with a supply tube 58 through which groundwater is fed into the vessel 54. On the side wall of the vessel 54 is a discharge tube 52 through which the treated liquid is discharged from the vessel 54. At the bottom of the vessel is a drain 53 through which residual precipitates are occasionally discharged from the vessel. In the middle of the discharge tube 52 are a filter 52b and a valve 52a. When denitrification reaches a prescribed level, the treated liquid is discharged by opening the valve 52b. The valve 52b may be manually operated, but it may be automatically operated by a mechanism connected to a sensor to detect the nitrogen concentration. Such a sensor may be inserted into the vessel through a port 55. The liquid in the vessel may be properly heated by a heater inserted into the vessel through a port 56.

Along the vertical axis of the vessel is a transport tube 61 provided with a funnel-shaped carrier collector 67. (These components were described above with reference to Fig. 8.) The transport tube 61 is so constructed as to suck the carrier 95 through the funnel-shaped carrier collector 67 (which is positioned below the level of the raw liquid 96), lead the carrier 95 downward through the tube, and return the carrier 95 to the vessel from the outlet 60 of the centrifugal force generator 62.

The upper part of the vessel is provided with an upwardly tapered wall 66 which surrounds the carrier collector 67. This structure helps the floating carrier 95 to gather around the carrier collector 67. The position of the carrier collector 67 is not necessarily at the center in the top view. Any position will be acceptable where the carrier gathers in the vessel. For example, the carrier collector 67 may be displaced from the center in the top view and positioned where the carrier gathers. This is accomplished if the slope angle of the tapered wall 66 is varied from place to place along the periphery of the vessel. (In the illustrated example, the angle of the tapered wall is uniform throughout the periphery.)

Moreover, it is not always necessary that the tapered wall encircles the entire periphery, although the illustrated vessel has a tapered wall encircling the entire periphery. The tapered wall is not restricted in configuration; it is merely intended to narrow the upper space of the vessel, thereby helping the carrier to be collected by the carrier collector 67. For example, the wall surrounding the carrier collector 67 may be partly inclined and partly vertical.

The funnel-shaped carrier collector is not necessarily essential. The carrier collector may be of straight cylindrical shape, although one with a funnel-shaped opening is more effective in collecting the carrier. A modification is possible (although not shown) in which the tapered (or inclined) wall 66 is perforated so that it passes the raw liquid alone and the raw liquid passing through the perforation is discharged through a pipe fixed to the upper part of the vessel wall at the same height as the tapered wall 66.

The biochemical reactor of liquid current type constructed as mentioned above is operated in the following manner.

The vessel 54 is filled with the carrier 95 and then charged with the raw liquid 96 through the supply tube 58. The treated liquid is discharged through the discharge tube 52 extending from the side wall of the vessel.

The operation of the reactor may be carried out batchwise or continuously. In batchwise operation, the carrier 95 and the raw liquid 96 are circulated in the reactor at a predetermined times until the nitrogen concentration in the raw liquid falls below a standard. Then, the treated liquid is discharged and the fresh raw liquid is charged. In continuous operation, the raw liquid is replenished and the treated liquid is discharged at all times.

The rising carrier 95 is collected in the vicinity of the carrier collector 67 by the annular tapered wall 66. The carrier 95 is then moved downward through the transport tube 61 and returned to the vessel through the outlet 60. The carrier 95 rises through the vessel, and the above-mentioned steps are repeated. During such circulation, nitrogen in the raw liquid is removed by microorganisms supported on the carrier 95.

The reactor constructed as mentioned above is capable of gathering the carrier 95 in the vicinity of the carrier collector 67 and hence recovering the carrier 95 through the funnel-shaped carrier collector 67, even if the carrier 95 has an apparent specific density lower than 1 (due to gas evolution) and hence accumulates near the surface of the liquid. The carrier collector 67 is positioned at the center of the vessel as viewed from above, and the carrier 95 moves toward that position. Therefore, the carrier 95 is uniformly distributed and circulated without stagnation in the vessel.

The vigorous flow and agitation of the carrier 95 permits the raw liquid to contain the carrier 95 in high concentrations, and this increases the efficiency of treatment. The present inventors found that the above-mentioned biochemical reactor of the present invention permits the carrier 95 to be charged in such an amount that the apparent volume of the carrier accounts for about 60% of the capacity of the vessel. This ratio is favorably compared with that (about 50%) in the case of the conventional biochemical reactor shown in Fig. 24. Incidentally, the carrier 95 floats in principle whenever its specific gravity is lower than that of the raw liquid 96, although it has been mentioned above that the carrier floats and accumulates when its specific gravity decreases below 1. Whether or not the carrier 95 floats depends largely on the flow of the raw liquid 96. Therefore, if there is an upward current, the carrier 95 will float even though its specific gravity is greater than that of the raw liquid.

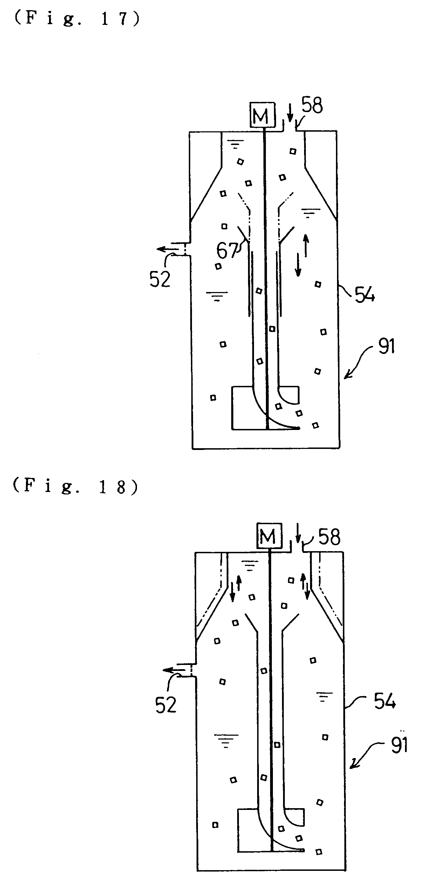

The embodiment shown in Fig. 17 is designed such that the carrier collector 67 is movable up and down. The advantage of this movable carrier collector is that it can be lowered to a proper position if the carrier accumulates so densely near the surface of the raw liquid that it is difficult to recover it efficiently.

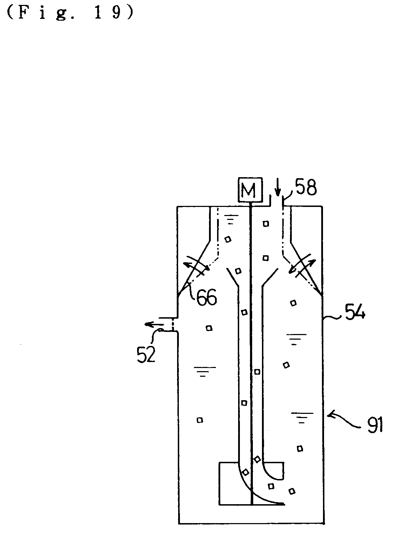

The embodiment shown in Fig. 18 is designed such that the annular tapered wall 66 is movable up and down. The embodiment shown in Fig. 19 is designed such that the slope angle of the tapered wall 66 is adjustable. The movable or adjustable tapered wall 66 produces the same effect as the movable carrier collector 67.

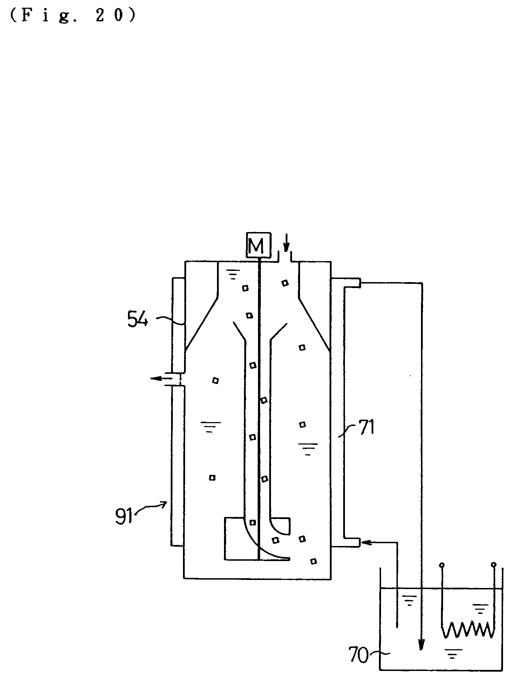

The embodiment shown in Fig. 20 is designed such that the vessel 54 is enclosed in an outer jacket 71 through which warm water 70 is circulated in order to promote the proliferation of microorganisms. The optimum temperature for denitrifying bacteria is about 40°C at maximum. Their growth rate decreases at temperatures above this limit. Heating of the vessel 54 may be accomplished by arranging heaters directly around the vessel 54 or by inserting a heater into the raw liquid through a port formed in the side wall of the vessel as mentioned above.

In the above-mentioned embodiments, the vessel is of cylindrical shape; however, the vessel may be of cubic shape.

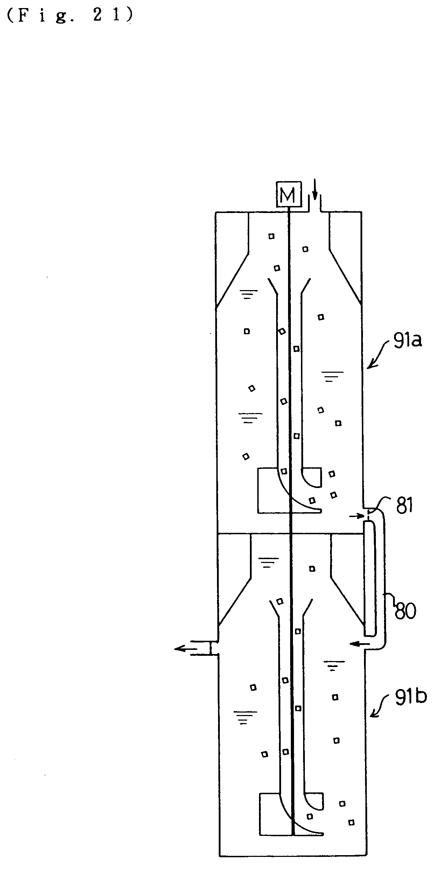

The above-mentioned embodiments are intended to be used alone; however, they may be used in tandem. An example is shown in Fig. 21. In this example, two units of biochemical reactors 91a, 91b are placed on top of the other and are connected through a connecting pipe 80, so that the raw liquid is treated twice in the upper and lower units. The connecting pipe 80 is provided with a filter 81 which blocks the carrier but passes only the raw liquid. The number of units to be joined is not limited to two.

It is also possible to arrange side by side two or more units of the biochemical reactors. The multi-stage treatment reduces the number of circulation of raw liquid in each vessel, which leads to efficient treatment.

In order to construct a purification system for groundwater or wastewater, the biochemical reactor of the present invention may be incorporated into existing water purification facilities made up of sedimentation basins, filter tanks, and chemical treatment tanks, and the like. It may be placed before or after the existing purification facility. In the case where the purification facility is made up of several units, it may be placed among them.

The foregoing is about the biochemical reactor of liquid current type and the purification system incorporated with it. The following is about the general-purpose fluid transport-stirring apparatus that employs the transport means used in the above-mentioned biochemical reactor of liquid current type.

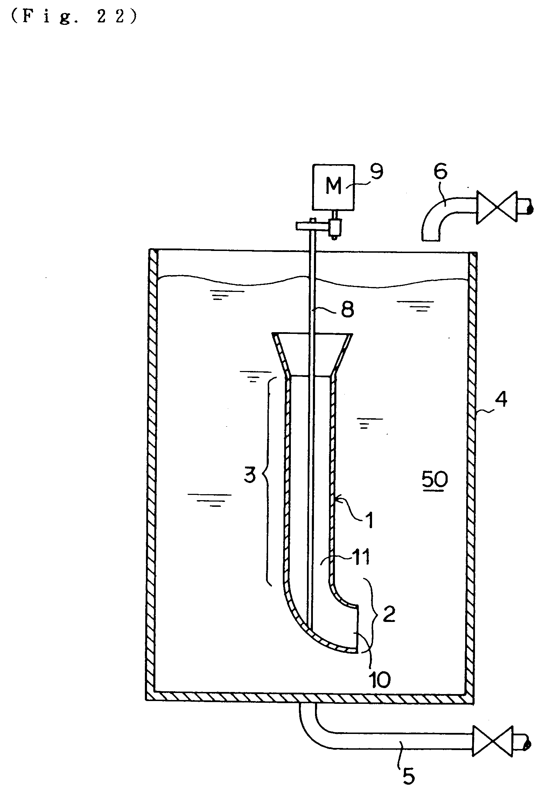

Fig. 22 is a vertical sectional view showing one embodiment of the general-purpose fluid transport-stirring apparatus. This apparatus is similar in structure in the biochemical reactor shown in Fig. 1, except that the liquid in the vessel 4 does not contain the carrier.

This fluid transport-stirring apparatus is capable of simultaneously transporting the liquid 50 downward and stirring the liquid 50 in the vessel 4. Consequently, this apparatus can be used to transport and/or stir a liquid.

The fluid 50 passes through the transport tube 1 and leaves the outlet 10. Having no objects therein (except the shaft 8) which prevent the smooth flow of the fluid, the transport tube transports and stir a large amount of fluid. The rotary drive means 9 needs only a small amount of power to rotate the transport tube 1 and hence it consumes only a small amount of electric power. In addition, it is simple in structure, almost immune to trouble, and cheap in cost.

The fluid transport-stirring apparatus of the present invention can be applied to any fluid, including gas, liquid, and slurry (containing a large number of small solids). When applied to a slurry, it produces an additional effect of protecting solids from damage.

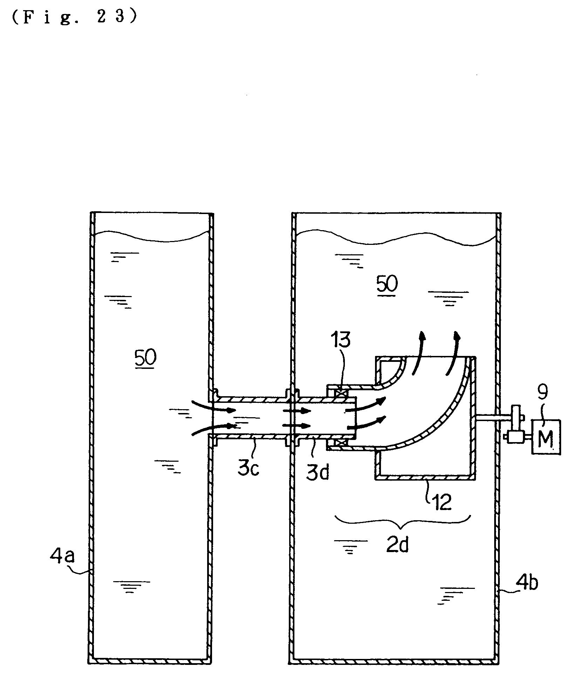

This apparatus can also be used to transport a liquid from one vessel to another. An example is shown in Fig. 23. The system consists of two vessels 4a and 4b and a fluid guide 3c connecting them together. The vessel 4b is provided with an auxiliary fluid guide 3d which communicates with the fluid guide 3c. The auxiliary fluid guide 3d is connected, through a bearing 13, to a centrifugal generator 2d which is enclosed by a hollow cylindrical casing 12. The centrifugal generator 2d and the hollow cylindrical casing 12 are turned by a horizontal shaft. The hollow cylindrical casing 12 functions to reduce the resistance which the centrifugal force generator 2 meets during its rotation in the liquid.

The biochemical reactor of liquid current type according to the present invention exhibits the following experimental results when applied to practical denitrification.

The experiment was carried out using the reactor as shown in Fig. 16. The vessel 54 has a capacity of 0.5 m³, and the transport tube 61 has an inside diameter of 110 mm and a length of 1180 mm (including the carrier collector 67 and the centrifugal force generator 62). The centrifugal force generator 62 turns at a rate of 150 rpm.

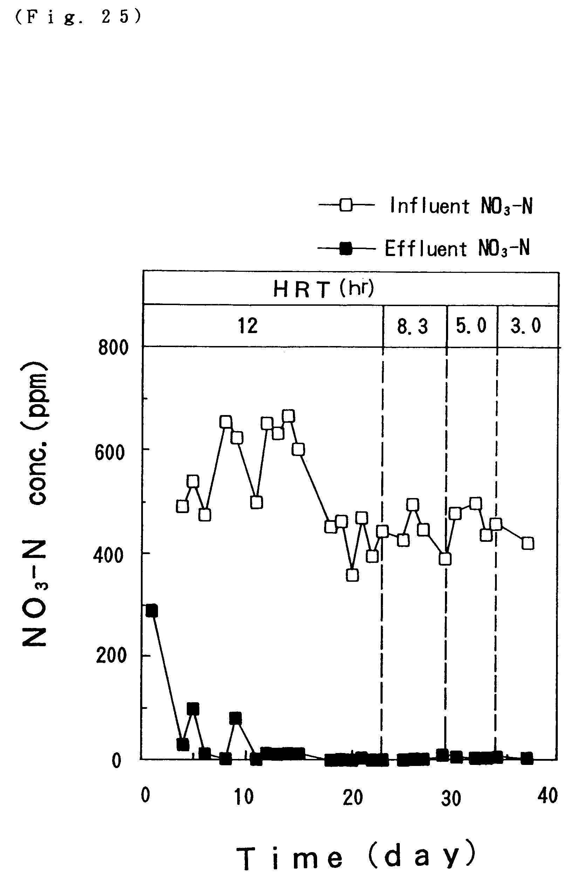

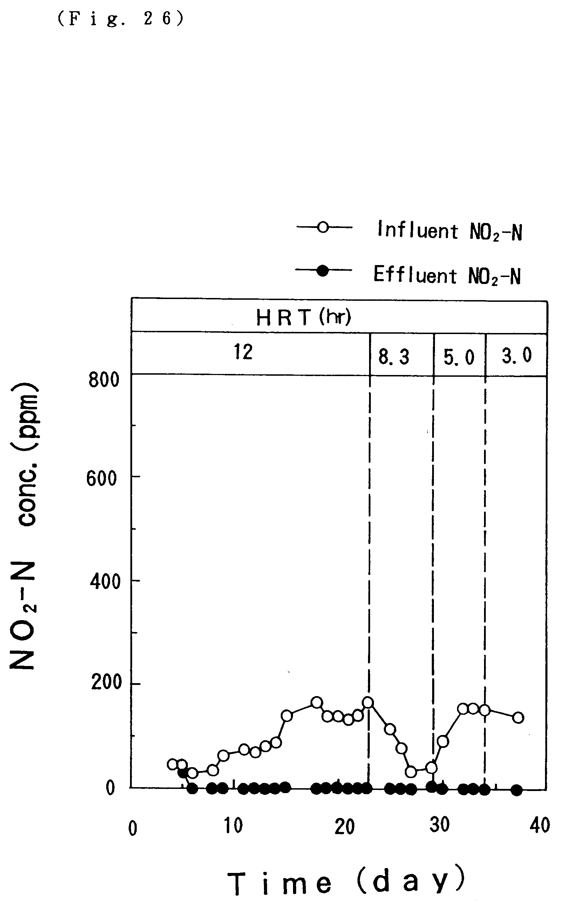

The biochemical reactor constructed as mentioned above was charged with industrial wastewater. The concentrations of nitrate nitrogen (NO₃-N) and nitrite nitrogen (NO₂-N) in the industrial wastewater were monitored under the anaerobic condition. Denitrification was carried out by using denitrifying bacteria obtained from common activated sludge. The denitrifying bacteria were immobilized on a carrier which is an open-cell cellulose foam having a particle diameter of 3 mm. The carrier (0.2 m³) was charged into the vessel 54. The ratio of charging is about 20% in terms of apparent specific gravity and about 40% in terms of volume. The residence time of the wastewater in the vessel was 12 h, 8.3 h, 5.0 h, and 3.0 h. The results are graphically shown in Figs. 25 and 26. It is noted that the concentrations of both NO₃-N and NO₂-N in the effluent (treated liquid) are lower than those in the influent (raw liquid). It is also noted that the reactor maintains the denitrifying ability even when the residence time is reduced to 3.0 hours. Thus it was demonstrated that the reactor is capable of denitrifying a large amount of industrial wastewater in a short time.

## Claims

1. A biochemical reactor of liquid current type which is used to proliferate microorganisms or to selectively remove or convert specific elements or compounds in a raw liquid by biodegradation, said biochemical reactor comprising:
a vessel to hold an immobilizing carrier and a raw liquid; and
a transport means for transporting said immobilizing carrier and said raw liquid over a certain distance from one place to another in said vessel, wherein said transport means comprises:
a rotary drive;
a tubular centrifugal force generator which is turned by said rotary drive and has a suction passage extending outward from the axis of rotation and terminating with an outlet; and
a tubular fluid guide which has an inlet at one end thereof and an internal passage extending from said inlet and communicating with said suction passage of said centrifugal force generator, said inlet of said fluid guide and said outlet of said centrifugal force generator being positioned apart in said vessel.

2. A biochemical reactor of liquid current type as claimed in Claim 1, wherein the inlet of the fluid guide and the outlet of the centrifugal force generator are positioned apart in the vertical direction in the vessel.

3. A biochemical reactor of liquid current type as claimed in Claim 2, wherein the vessel is constructed such that its upper part is tapered upward over its entire periphery and the inlet of the fluid guide is positioned where the carrier accumulates in the narrowed space.

4. A biochemical reactor of liquid current type as claimed in Claim 2 or 3, wherein the inlet of the fluid guide is movable up and down so that the position of the inlet can be adjusted to a desired height.

5. A biochemical reactor of liquid current type as claimed in any of Claims 1 to 4, wherein the fluid guide has a straight part which introduces the fluid to the suction passage of the centrifugal force generator and the axis of the straight part is aligned with the axis of rotation of the rotary drive.

6. A biochemical reactor of liquid current type as claimed in any of Claims 1 to 5, wherein the centrifugal force generator and the fluid guide are integrally constructed of a single tube, to thereby rotate them together.

7. A biochemical reactor of liquid current type as claimed in any of Claims 1 to 5, wherein the centrifugal force generator and the fluid guide are rotatably joined to each other, so that the former rotates with respect to the latter which is stationary.

8. A biochemical reactor of liquid current type as claimed in any of Claims 1 to 7, wherein the centrifugal force generator is enclosed by a hollow cylindrical casing, which has approximately the same radius as the maximum radius of rotation of the centrifugal force generator and also has an opening in its circumferential wall, which communicates with the outlet of the centrifugal force generator.

9. A biochemical reactor of liquid current type as claimed in any of Claims 1 to 8, wherein the vessel is provided with a means for feeding a raw liquid to the vessel continuously and a means for discharging a treated liquid from the vessel continuously.

10. A biochemical reactor of liquid current type as claimed in Claim 9, wherein two or more units thereof are arranged side by side or on top of the other for multi-stage treatment which is carried out such that the liquid treated in the preceding stage is treated again in the following stage.

11. A biochemical reactor of liquid current type as claimed in any of Claims 1 to 10, wherein the immobilizing carrier has an apparent specific gravity smaller than 1.2.

12. A biochemical reactor of liquid current type as claimed in any of Claims 1 to 11, wherein the immobilizing carrier supports denitrifying bacteria so that the reactor is used for denitrification.

13. A biochemical reactor of liquid current type as claimed in any of Claims 1 to 11, wherein the carrier supports methane-generating bacteria so that the reactor is used for methane fermentation.

14. A biochemical reactor of liquid current type as claimed in any of Claims 1 to 11, wherein the immobilizing carrier supports nitrifying bacteria or microorganisms living in activated sludge layer so that the reactor is used for the reduction of ammonia nitrogen or BOD.

15. A biochemical reactor of liquid current type as claimed in any of Claims 1 to 14, wherein the carrier-containing raw liquid to be circulated in the vessel is replaced with a raw liquid which does not contain the carrier.

16. A system for purifying groundwater or wastewater which comprises the biochemical reactor of the present invention as claimed in any of Claims 1 to 15, which is incorporated into existing water purification facilities made up of sedimentation basins, filter tanks, and chemical treatment tanks.

17. A fluid transport-stirring apparatus which comprises:
a rotary drive means; and
a centrifugal force generator which is positioned in a vessel holding a fluid, wherein said centrifugal force generator comprises:
a suction tube extending outward from the axis of rotation of said rotary drive means;
an outlet formed at the outer end of said suction tube; and
a suction passage arranged on rotation axis side.

18. A fluid transport-stirring apparatus as claimed in Claim 17, wherein the centrifugal force generator has a fluid guide connected thereto which introduces the fluid to the suction passage and whose axis is aligned with the axis of rotation of the rotary drive means.

19. A fluid transport-stirring apparatus as claimed in Claim 18, wherein the tube constituting the centrifugal force generator and the fluid guide are integrally constructed of a single tube, to thereby rotate them together.

20. A fluid transport-stirring apparatus as claimed in Claim 18, wherein the tube constituting the centrifugal force generator and the fluid guide are rotatably joined to each other, so that the former rotates with respect to the latter which is stationary.

21. A fluid transport-stirring apparatus as claimed in any of Claims 17 to 20, wherein the centrifugal force generator is enclosed by a hollow cylindrical casing, which has approximately the same radius as the maximum radius of rotation of the centrifugal force generator and also has an opening in its circumferential wall, which communicates with the outlet of the centrifugal force generator.
